(19) Europäisches Patentamt
European Patent Office
Office européen des brevets

(11) **EP 1 936 236 B1**

(12) **FASCICULE DE BREVET EUROPEEN**

(45) Date de publication et mention
de la délivrance du brevet:
**24.11.2010 Bulletin 2010/47**

(51) Int Cl.:
**F16H 19/00** *(2006.01)* **F16H 25/18** *(2006.01)*

(21) Numéro de dépôt: **06405529.6**

(22) Date de dépôt: **19.12.2006**

(54) **Transmission rotative-linéaire**

Rotativ-lineares Getriebe

Rotary-linear transmission

(84) Etats contractants désignés:
**AT BE BG CH CY CZ DE DK EE ES FI FR GB GR HU IE IS IT LI LT LU LV MC NL PL PT RO SE SI SK TR**

(43) Date de publication de la demande:
**25.06.2008 Bulletin 2008/26**

(73) Titulaire: **Société Industrielle de Sonceboz S.A.
2605 Sonceboz (CH)**

(72) Inventeur: **Koechlin, Samuel François
2606 Corgémont (CH)**

(74) Mandataire: **Reuteler, Raymond Werner et al
Reuteler & Cie SA
Chemin de la Vuarpillière 29
1260 Nyon (CH)**

(56) Documents cités:
**WO-A-98/37309**     **DE-A1- 19 601 300**
**DE-A1- 19 815 653**     **US-A- 5 517 931**

## EP 1 936 236 B1

**Description**

La présente invention concerne une transmission transformant un mouvement rotatif en un mouvement de translation.

Pour transformer un mouvement rotatif en mouvement de translation d'amplitude limitée, trois systèmes sont connus dans l'état de la technique: un système à pignon crémaillère imposant une loi de transmission linéaire, un système bielle-manivelle, et un système came-plongeur.

Le système bielle-manivelle a deux inconvénients importants. D'une part, la loi de transmission ne peut pas être librement choisie, d'autre part, il comporte un risque d'arc-boutement en fin de course et, par conséquent, sa réversibilité ne peut pas être garantie dans un certain domaine de fonctionnement lorsque l'on tient compte des tolérances géométriques et des frottements dans les pivots.

Le système came-plongeur permet de choisir, avec une certaine liberté, la loi de transmission, mais on doit prendre des mesures pour réduire les forces de frottement et l'usure, surtout lorsque l'on exige de grandes forces. Il y a par ailleurs des limites quant à la non linéarité de la loi de transmission que l'on peut obtenir et la réversibilité du système.

Certaines applications exigent le réglage de la position d'un organe contre une charge qui varie fortement en fonction de la position. Par ailleurs, dans certaines applications, on exige que la transmission soit réversible, même dans les positions où le rapport de réduction est grand.

Dans beaucoup d'applications, les actionneurs linéaires électriques peuvent avantageusement remplacer les actionneurs pneumatiques ou hydrauliques, par exemple les applications dans le domaine automobile. Les actionneurs électriques ont l'avantage de pouvoir régler avec précision la position d'un organe de régulation, tel qu'un pointeau, une soupape ou un clapet. En raison du coût et de l'encombrement du moteur électrique, on doit toutefois veiller à ce qu'il soit dimensionné au plus juste par rapport aux efforts exigés et, dans beaucoup d'applications, qu'il soit toujours réversible. En effet, dans les cas où la charge dépasserait un seuil bien défini, le système devrait pouvoir se débloquer pour éviter d'être endommagé ou d'endommager l'application.

Dans des applications où la position d'un organe doit être réglée contre une charge variant fortement en fonction de la position, l'utilisation d'une transmission non linéaire entre l'actionneur et l'organe permet d'éviter de surdimensionner l'actionneur en ajustant la force de l'actionneur au plus près de la charge, au lieu de le dimensionner par rapport au maximum de la charge.

Les documents DE 19815653, DE 19601300, WO 98/37309 et US 5,517,931 décrivent des transmissions pour la transformation d'un movement rotatif en un movement de translation, comprenant une came et une contre-cam pivotantes munies de profils dentés.

Notamment le document DE 19815653 divulgue les caractéristiques du préambule de la revendication 1.

En vue de ce qui précède, un but de l'invention est de fournir une transmission permettant de générer une loi de transmission fortement non linéaire, c'est-à-dire avec un rapport de réduction qui varie de façon importante avec la position, mais qui reste toujours réversible, même dans les positions où le rapport de réduction est grand.

Il est avantageux de fournir une transmission pour la transformation d'un mouvement rotatif en un mouvement de translation qui varie de façon non linéaire et qui soit performante, précise et fiable.

Il est avantageux de fournir une transmission qui peut être utilisée avec un actionneur sous forme de moteur électrique pour la transmission d'une force qui varie de façon importante avec la position, mais qui reste toujours réversible, même dans les positions où le rapport de réduction est grand.

Il est avantageux de fournir une transmission pour la transformation d'un mouvement de rotation en une translation qui est compacte et économe.

Des buts de l'invention sont réalisés par une transmission selon la revendication 1.

La transmission selon la présente invention comprend une came pivotant autour du premier axe, et une contre-came pivotant autour d'un deuxième axe destinée à être couplée à un organe effectuant un mouvement de translation, la came ayant une surface de came munie d'un profil denté engageant une surface de came munie d'un profil denté de la contre-came.

La came pivote de manière bidirectionnelle autour du premier axe sur un angle limité, inférieur à 90˚. La contre-came pivote également de manière bidirectionnelle autour du pivot sur un angle limité, inférieur à 90˚.

Les profils dentés conjugués de la came et de la contre-came permettent de garantir la synchronisation des mouvements de rotation de la came et de la contre-came, tout en transmettant une force radiale sur la contre-came en direction de son axe de pivot. Cette configuration permet également d'éviter le risque d'arc-boutement, puisque l'on peut générer la loi de transmission voulue tout en ayant, à la position limite, une force résultante exercée sur la denture de la came qui comprend une composante tangentielle, c'est-à-dire qui applique un couple de rotation autour de l'axe de la came pour assurer sa réversibilité.

L'invention jouit donc de la grande liberté de choix de lois de transmission comme pour une came, tout en permettant d'assurer la réversibilité et la précision du système même pour une loi de transmission fortement non linéaire.

La transmission selon l'invention est également très avantageuse en ce qu'elle permet de transmettre des efforts très importants avec un bon rendement et un faible usure des cames, dans une construction simple et économe à fabriquer. Du fait que l'on peut facilement ajuster au mieux la loi de transmission pour une application donnée, l'invention permet d'optimiser le dimensionnement de l'actionneur rotatif agissant sur la came par rapport aux efforts à transmettre.

De préférence, le profil dentée de la came, respectivement de la contre-came, est ondulé de façon à ce qu'il y ait au moins deux points de contact distants l'un de l'autre, et où la ligne des forces normales aux surfaces de contact n'est pas parallèle. La denture comprend donc une ondulation du profil sans points anguleux, c'est-à-dire dont l'expression mathématique est continûment dérivable.

De préférence, tous les points du profil denté de la came et de la contre-came participent à la transmission et sont au contact du profil conjugué à un moment ou un autre, en fonction de la position.

La came peut être munie d'un profil secondaire à l'opposé de la surface de came dentée par rapport à l'axe de rotation, engageant un profil secondaire de la contre-came disposée face à la surface de contre-came dentée afin d'effectuer un entraînement dans le sens radial opposé à celui réalisé par les surfaces de came dentées, tout en garantissant l'engrènement de celles-ci.

Dans une variante, l'entraînement dans le sens radial opposé à celui réalisé par les surfaces dentées peut être généré par un ressort ou autre moyen d'application de forces (hydraulique, pneumatique, magnétique) agissant dans une direction radiale sur la contre-came, c'est-à-dire dans une direction allant du pivot vers la surface dentée de contre-came.

D'autres buts et aspects avantageux de l'invention ressortiront des revendications, de la description détaillée ci-après et des dessins annexés, dans lesquels

les Figures 1a et 1b sont des illustrations schématiques simplifiées de la transmission selon l'invention pour décrire les forces et la loi du mouvement de la transmission (surfaces dentées non illustrées);

la Fig. 2 est une vue d'une transmission selon une forme d'exécution de l'invention;

la Fig. 3 est un graphique illustrant une courbe de transmission non linéaire pouvant être réalisée par une transmission selon l'invention;

la Fig. 4 est une illustration schématique et partielle des profils de la came et de la contre-came;

la Fig. 5 est une illustration simplifiée et schématique d'un système de soupape de sécurité pour turbocompresseur d'un moteur à explosion;

la Fig. 6 est un graphique illustrant une courbe de force appliquée sur la soupape de la Fig. 5, par rapport à sa course;

la Fig. 7 est une vue détaillée d'une partie de la surface dentée de la came et contre-came ; et

la Fig. 8 est une graphique illustrant la condition limite de réversibilité pour un exemple de transmission selon l'invention.

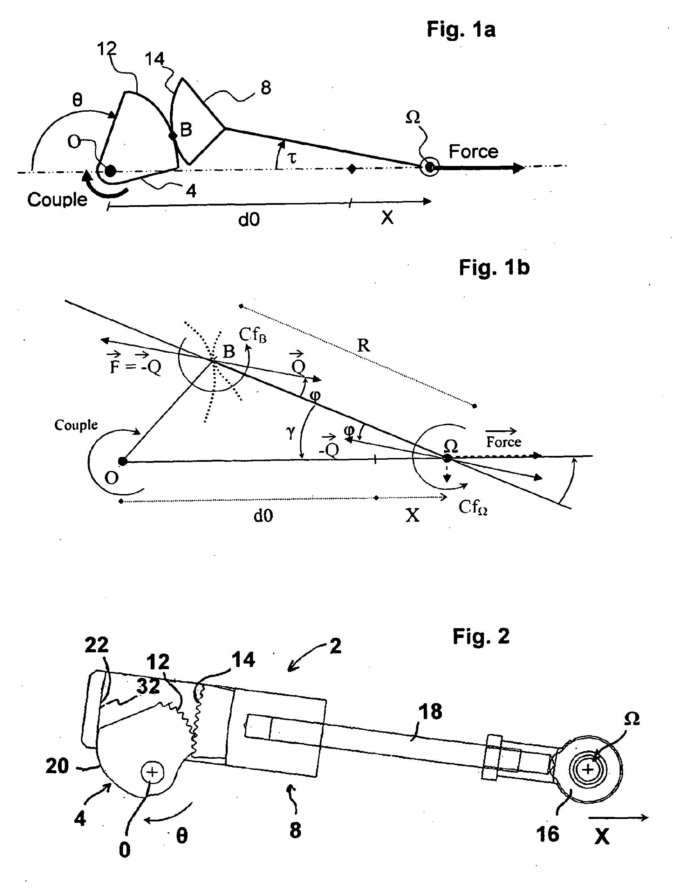

Faisant référence tout d'abord aux Figures 1 et 2, une transmission 2 permettant la transformation d'un mouvement rotatif θ en un mouvement de translation X, comprend une came 4 pivotant autour d'un axe de rotation 0, et une contre-came 8 pivotant autour d'un pivot Ω destinée à être couplée à un organe (non illustré), guidée de façon à effectuer le mouvement de translation X. La came 4a une surface de came 12 munie d'un profil denté engageant une surface de came 14 de la contre-came, également munie d'un profil denté, conjugué au profil denté de la came.

Dans l'exemple illustré, la contre-came 8 est reliée à une partie de pivot 16 par une tige 18.

La came peut en outre comprendre un profil de came secondaire 20 opposé au profil denté 12 par rapport à l'axe de rotation 0, engageant un profil de came secondaire 22 de la contre-came 8 disposée face à la surface denté 14 de la contre-came, les surfaces de came secondaire servant à assurer un entraînement dans le sens radial opposé à celui réalisé par les surfaces dentées tout en garantissant l'engrènement de celles-ci. Il est toutefois possible de se dispenser du profil secondaire et de remplacer la fonction effectuée par le profil secondaire par des moyens d'application d'une force sur la contre-came dans une direction orientée du pivot Ω vers la contre-came 8.

Un engrenage conventionnel est conçu pour transmettre un couple, par conséquent seule une partie du profil des roues dentées est utilisée, à savoir les flancs de dents, le fonds et les têtes de dents ne participant pas à la transmission et ne venant jamais en contact. Le profil de denture selon l'invention transmet au contraire un effort radial (qui se répercute sur le pivot), et un mouvement de rotation de la contre-came. Tous les points du profil participent à la transmission et sont donc au contact du profil conjugué à un moment ou à un autre. Il ne s'agit pas de profils d'engrenages traditionnels parce que la denture comprend une ondulation du profil sans point anguleux (c'est à dire dont l'expression mathématique est continûment dérivable) et parce que la loi de transmission est librement choisie.

La transmission selon l'invention a trois degrés de liberté : la rotation de la came ($\theta$), la translation (X) du pivot et la rotation ($\tau$) de la contre-came autour du pivot (voir fig.1). La relation entre X et $\theta$ étant donnée par la loi de transmission souhaitée, l'évolution de $\tau$ peut être librement choisie pour optimiser le comportement de l'engrenage, dans la mesure ou le rapport des vitesses de rotation de la came et de la contre-came n'a pas à être maintenu constant.

Lorsque la rotation de la came est limitée à une fraction de tour avec un fonctionnement bidirectionnel, les profils secondaires 20, 22, permettent d'assurer un entraînement dans le sens opposé à celui réalisé par les surfaces dentés, tout en garantissant l'engrènement de celles-ci. Les profils secondaires sont lisses car ils se déplacent en sens opposés et présentent donc un glissement important.

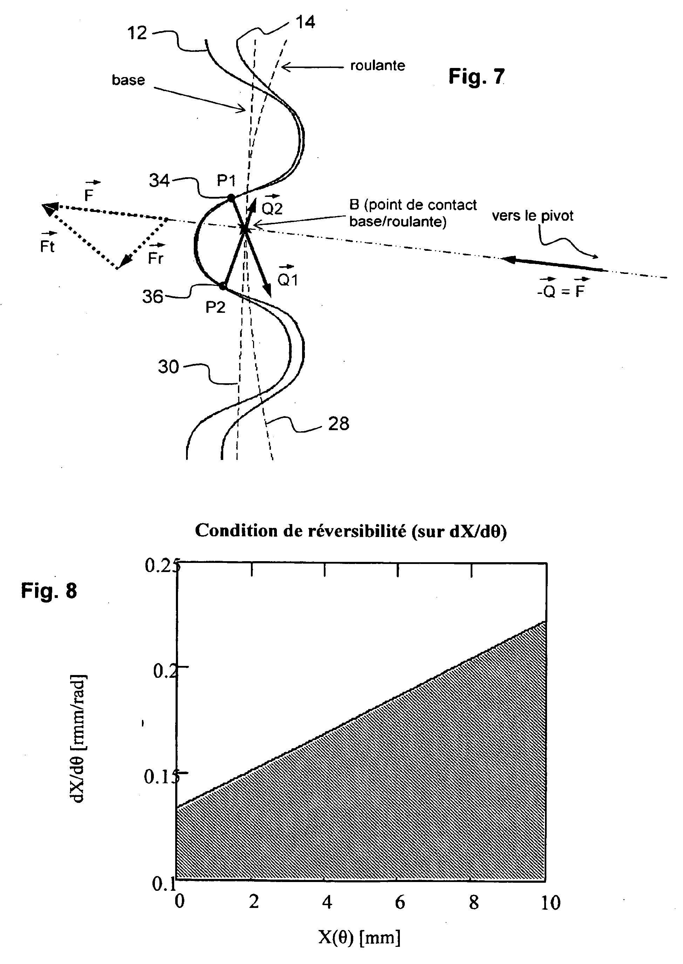

Le profil denté peut être défini comme une ondulation autour d'une courbe de base 28, 30 (voir fig. 7). Afin de garantir à la fois un engrènement correct et une bonne transmission de la force sur la contre-came, il est judicieux de choisir comme courbe de base pour le profil de contre-came un arc de cercle centré sur le pivot $\Omega$.

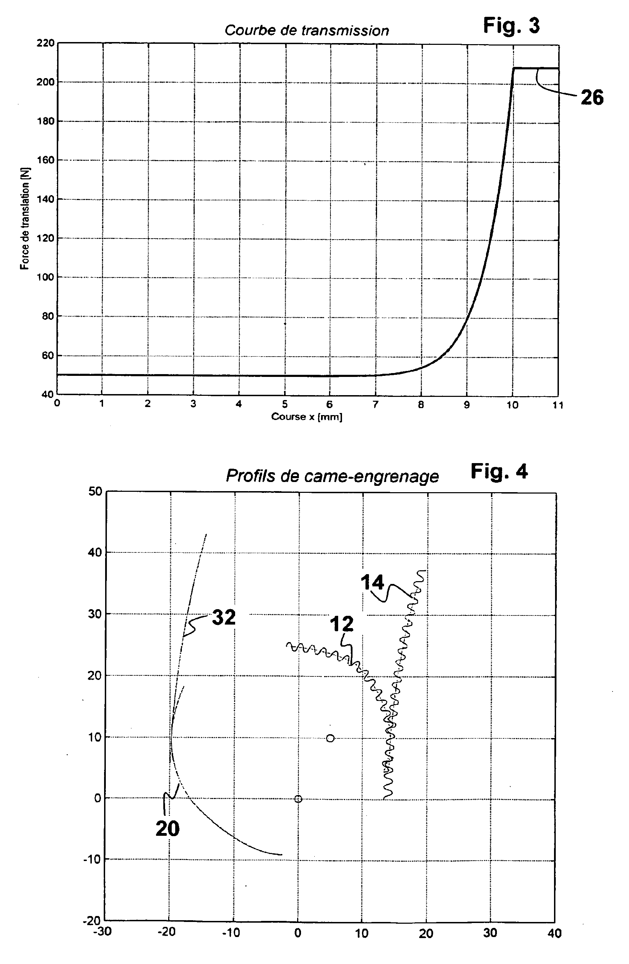

Une configuration judicieuse du système bidirectionnel correspond à un profil secondaire de la contre-came défini par un arc de cercle 32 centré sur le pivot $\Omega$ (voir fig. 1 et 4). Dans cette configuration, les profils secondaires ne dépendent que de la loi de transmission souhaitée (X($\theta$)), et nullement du profil des dents : on a ainsi un mécanisme robuste par rapport aux erreurs géométriques de profil.

Etant donnée une loi de transmission X($\theta$) (imposée par l'application) :

    a) soit on choisit une loi de mouvement $\tau(\theta)$ de la contre-came qui détermine la base et la roulante du mouvement de la contre-came sur la came ;
    b) soit on choisit la forme de la roulante et on détermine la loi de mouvement $\tau(\theta)$.

On définit ensuite le profil de denture sur la contre-came comme une ondulation de la roulante. Plus précisément, on exprime la distance polaire au centre du pivot comme une fonction périodique définissant le profil de dent (typiquement un polynôme trigonométrique) qu'on module par la distance polaire de la roulante.

On détermine ensuite le profil de denture conjugué (sur la came) comme l'enveloppe du profil de denture de la contre-came, enveloppe définie par le mouvement de la came sur la contre-came.

Si on néglige le couple de frottement dans le pivot, la résultante des forces F exercées sur la contre-came est colinéaire au pivot $\Omega$.

L'engrènement assure toujours plusieurs points de contact 34, 36 simultanément, afin que la résultante des forces de contact F soit toujours dirigée vers le pivot $\Omega$ (voir Fig. 1 et 7) quel que soit l'angle limite de frottement, et que la synchronisation du mouvement soit ainsi assurée dans tous les cas.

Afin d'assurer la réversibilité du système, la force résultante F d'engagement des surfaces de came et de contre came, en tous les points du profil, comprend une composante radiale Fr et une composante tangentielle Ft non nulle et de sens invariable générant une couple sur la came. La réversibilité de la transmission dépendra de divers paramètres, notamment la loi de transmission, le coefficient de frottement, et les distances entre axe et pivot et entre pivot/axe et le point de contact B entre came et contre came. Les conditions de réversibilité, ou au contraire de verrouillage, du système, peuvent être exprimés par les relations présentées ci-après (voir figures 1a, 1b et 7).

    r : rayon de pivot
    $\lambda$ : pas de denture
    R : distance pivot-roulante
    d0 : entraxe initial
    $\mu$ : coefficient de frottement
    X : déplacement du pivot $\Omega$ par rapport à la position initiale d0
    $\theta$ : angle de rotation de la came
    $\gamma$: angle entre les lignes $\Omega$0 et $\Omega$B

**Condition de verrouillage générale :**

$$(d0 + X)\cdot\left(\tan(\gamma) - \tan(\phi)\right) + R\cdot\tan(\phi)\cdot\sqrt{1 + \tan(\gamma)^2} = 0$$

avec :

$$\tan(\gamma) = \frac{\dfrac{d}{d\theta}X}{d0 + X}$$

et :

$$\sin(\phi) = \frac{Cf_B + Cf_\Omega}{R \cdot Q}$$

Les couples de frottement $Cf_B$ et $Cf_\Omega$ sont proportionnels à la force résultante Q entre came et contre came. On note :

$$Cf_B = cf_B \, . \, Q \quad et \ \ Cf_\Omega = cf_\Omega \, . \, Q$$

d'où :

$$\sin(\phi) = \frac{cf_B + cf_\Omega}{R}$$

En remplaçant tan($\gamma$), on exprime $\dfrac{d}{d\theta}X$ :

$$\frac{d}{d\theta}X = \tan(\phi) \cdot (d0 + X) \cdot \frac{(d0 + X)^2 - R \cdot \left[-\tan(\phi)^2 \cdot R^2 + (d0 + X)^2 + (d0 + X)^2 \cdot \tan(\phi)^2\right]^{\frac{1}{2}}}{(d0 + X)^2 - \tan(\phi)^2 \cdot R^2}$$

**Condition de verrouillage approchée :**

Une bonne approximation consiste à considérer $\gamma \ll 45°$ d'où :

$$\sqrt{1 + \tan(\gamma)^2} \approx 1$$

La condition de verrouillage se simplifie alors en :

$$\frac{d}{d\theta}X = \tan(\phi)\cdot(d0 + X - R)$$

$$\frac{d}{d\theta}X = \frac{\sin(\phi)}{\sqrt{1 - \sin(\phi)^2}}\cdot(d0 + X - R)$$

$$\frac{d}{d\theta}X = \frac{cf_B + cf_\Omega}{\sqrt{R^2 - \left(cf_B + cf_\Omega\right)^2}}\cdot(d0 + X - R)$$

Comme $\Phi$ est petit, $cf_B + cf_\Omega << R$ , et on peut écrire :

$$\frac{d}{d\theta}X = \frac{cf_B + cf_\Omega}{R}\cdot(d0 + X - R)$$

**Evaluation des couples de frottement :**

La loi de Coulomb dans le pivot $\Omega$ donne :

$$Cf_\Omega = r\cdot\frac{\mu}{\sqrt{1 + \mu^2}}\cdot Q$$

où r est le rayon du pivot

Moment des forces de contact au point B :

$$Cf_B = \frac{\mu}{\sqrt{1 + \mu^2}}\cdot\sum_{i=1}^{p} BP_i\cdot Q_i$$

où p est le nombre de points de contact Pi, et Qi est la norme de la force de contact $\vec{Q_i}$ au point Pi telle que :

$$\sum_{i=1}^{p} \vec{Q_i} = \vec{Q}$$

Comme les points de contact évoluent au cours de l'engrènement, $Cf_B$ varie aussi au cours de l'engrènement. A défaut d'un calcul exact dans le cas général,on propose la formule approchée :

$$\sum_{i=1}^{p} BP_i \cdot Q_i \approx \cdot \lambda \cdot Q$$

avec $\lambda$ le pas de denture

D'où :

$$Cf_B \cdot \approx \cdot \frac{\mu}{\sqrt{1 + \mu^2}} \cdot \lambda \cdot Q$$

On a donc avec les hypothèses ci-dessus :

$$cf_B + cf_\Omega = \frac{\mu}{\sqrt{1 + \mu^2}} \cdot (\lambda + r)$$

Comme $\mu \ll 1$, on peut écrire :

$$cf_B + cf_\Omega = \mu \cdot (\lambda + r)$$

**Expression simple de la condition de verrouillage :**

La condition de verrouillage s'exprime donc de la façon suivante :

$$\frac{d}{d\theta} X = \mu \cdot \frac{\lambda + r}{R} \cdot (d0 + X - R)$$

ce qui revient à exprimer $\tan(\Phi)$ sous la forme :

$$\tan(\phi) = \frac{\mu \cdot (\lambda + r)}{R}$$

La condition de réversibilité s'exprime alors par :

$$\frac{d}{d\theta} X > \mu \cdot \frac{r + \lambda}{R} \cdot (d0 + X - R)$$

**Exemple de calcul**

r : rayon de pivot = 4 mm
λ : pas de denture = 2 mm
R : distance pivot-roulante (prise constante) = 135 mm
d0 : entraxe initial = 150 mm
μ : coefficient de frottement = 0.2

En appliquant la condition de réversibilité exprimée ci-dessus, la figure 8 montre la courbe limite de réversibilité du système pour cet exemple, en fonction de la loi de transmission définie par dX/dθ (la translation X du pivot par rapport à la variation de l'angle de rotation de la came) en fonction de l'amplitude de la translation X(θ) du pivot.

Le système permet une loi de transmission avec de fortes non-linéarités tel que illustré par la courbe de transmission de la figure 3, sans pour autant risquer l'arc-boutement puisqu'on peut prendre une valeur constante de la force pour la partie de courbe 26.

Les actionneurs linéaires électriques peuvent remplacer avantageusement les actionneurs pneumatiques dans de nombreuses applications automobiles. Par rapport à ceux-ci, ils présentent l'avantage de pouvoir régler avec précision la position d'un organe de régulation (pointeau, soupape, clapet, etc.). Il est toutefois avantageux, au vue de leur coût et leur encombrement, de les dimensionner au plus juste par rapport aux efforts exigés.

Par ailleurs, on exige de certains actionneurs qu'ils soient toujours réversibles. En effet, dans les cas ou la charge dépasserait un seuil bien défini, le système doit se débloquer pour éviter d'être endommagé ou d'endommager l'application (fonction fail-safe).

Certaines applications exigent de réguler la position d'un organe contre une charge qui varie fortement en fonction de la position. Dans ce cas, un actionneur constitué d'un moteur électrique et d'une transmission non linéaire évite de surdimensionner l'actionneur : il est possible ainsi d'ajuster la force de l'actionneur au plus près de la charge au lieu de le dimensionner par rapport au maximum de charge.

La difficulté est de trouver une transmission qui puisse être à la fois fortement non-linéaire (c'est à dire avec un rapport de réduction qui varie de façon importante avec la position), mais qui reste toujours réversible, même dans les positions ou le rapport de réduction est grand.

La transmission selon l'invention peut être avantageusement implémentée dans divers domaines, entre autres le domaine des moteurs à combustion, par exemple pour les applications décrites ci-après.

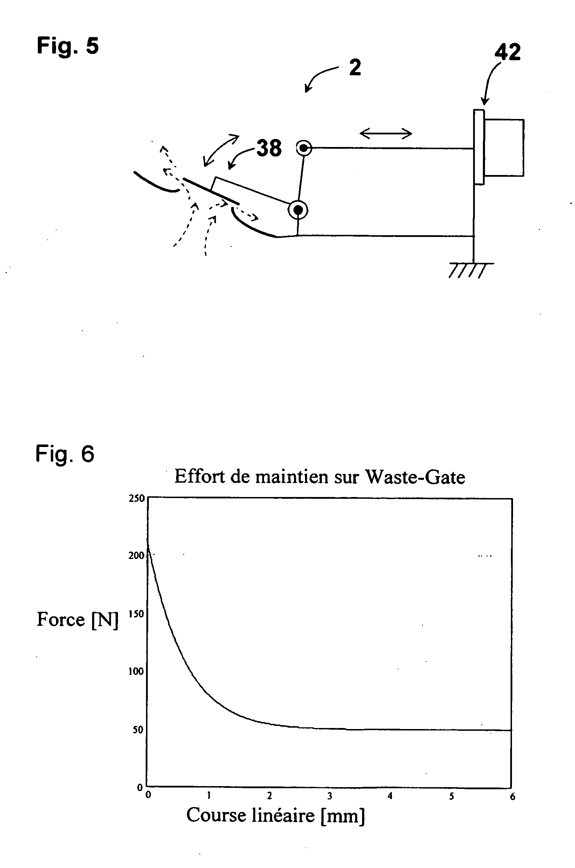

Exemple 1 : application soupape d'échappement (voir Fig. 5 et 6)

Lorsque le régime moteur dépasse un certain seuil, la pression des gaz chauds dans le turbocompresseur d'un moteur à explosion risque de l'emballer. Il faut donc une soupape de sécurité 38 qui évacue dans ce cas l'excès de gaz en amont de la turbine. Ceux-ci partent directement à l'échappement sans participer à l'entraînement du turbo (fonction « Waste-Gate »). L'actionneur 42 et la transmission 2 doivent donc supporter un effort important en position fermée, produit par la pression des gaz chauds en amont de la turbine, puis réguler finement l'ouverture lorsque cette pression dépasse le seuil prescrit. Dès que la soupape commence à s'ouvrir, l'effort diminue très rapidement. On a donc une courbe de force en fonction de la position qui présente une allure fortement non linéaire (voir fig. 6). En outre, en cas de défaillance de l'actionneur (fils coupés ou débranchés, par exemple), la soupape s'ouvre quand même si la pression devient trop forte (fonction fail-safe) en raison de la reversibilité de la transmission.

Exemple 2 : application recirculation de gaz d'échappement EGR (Exhaust Gas Recirculation)

Le recyclage des gaz d'échappement dans les moteurs diesel permet de réduire l'émission de particules. Une soupape régule le flux de gaz d'échappement réinjectés dans le moteur, qui sont destinés à être brûlés une deuxième fois. Un telle soupape est très sujette à l'encrassement, et a tendance à « coller » sur son siège. L'actionneur et sa transmission doivent donc prévoir un pic de force en début de course afin de la décoller.

En résumé, la transmission selon l'invention présente plusieurs avantages:

- pas de risque d'arc-boutement, autrement dit réversibilité garantie même dans les zones de transmission fortement non-linéaires.
- libre choix de la loi de transmission
- capacité à transmettre des efforts importants
- rendement comparable à celui d'un engrenage traditionnel

- simplicité dans sa construction, ce qui le rend peu couteux à fabriquer.

Une telle transmission permet, à moindre coût, d'ajuster au mieux la loi de transmission aux contraintes d'une application donnée, et ainsi d'optimiser le dimensionnement de l'actionneur par rapport aux efforts à transmettre.

**Revendications**

1.  Transmission pour la transformation d'un mouvement rotatif en un mouvement de translation, comprenant une came (4) pivotant autour d'un axe (0) et une contre-came (8) pivotant autour d'un pivot ($\Omega$), le pivot étant destiné à être couplé à un organe effectuant un mouvement de translation, la came ayant une surface de came munie d'un profil denté (12) engageant une surface de came munie d'un profil denté (14) de la contre-came, **caractérisée en ce que** la came (4) est bidirectionnelle et pivote autour de l'axe (0) sur un angle inférieur à 90°, et la contre-came (8) est bidirectionnelle et pivote autour du pivot ($\Omega$) sur un angle inférieur à 90°.

2.  Transmission selon la revendication 1 **caractérisée en ce que** la surface dentée de la came, respectivement de la contre-came, est ondulé de façon à ce qu'il y ait au moins deux points de contact (34, 36) distants l'un de l'autre, et où les lignes des forces normales aux surfaces de contact ne sont pas parallèles.

3.  Transmission selon la revendication 1 ou 2 **caractérisée en ce que** le profil denté de la surface de came, respectivement la surface de contre-came, comprend une ondulation du profil sans points anguleux, dont l'expression mathématique est continûment dérivable.

4.  Transmission selon l'une des revendications précédentes **caractérisée en ce que** tous les points du profil denté de la surface de came et de contre-came participent à la transmission et sont au contact du profil conjugué à un moment ou un autre, en fonction de la position.

5.  Transmission selon l'une des revendications précédentes **caractérisée en ce que** la came est munie d'un profil secondaire à l'opposé de la surface de came dentée par rapport à l'axe de rotation, engageant un profil secondaire de la contre-came disposée face à la surface dentée de contre-came afin d'effectuer un entraînement dans le sens radial opposé à celui réalisé par les surfaces de came dentées, tout en garantissant l'engrènement de celles-ci.

6.  Transmission selon l'une des revendications précédentes **caractérisée en ce que** la force résultante (F) d'engagement des surfaces de came et de contre came, en tous les points du profil, comprend une composante tangentielle (Ft) non nulle et de sens invariable, afin d'assurer la réversibilité du système.

7.  Transmission selon l'une des revendications précédentes **caractérisée en ce que** la loi de transmission de la transmission satisfait la relation

$$\frac{d}{d\theta}X > \mu \cdot \frac{r + \lambda}{R} \cdot (d0 + X - R)$$

où
X est le déplacement en translation du pivot
$\theta$ est l'angle de rotation de la came
r est le rayon de pivot
$\lambda$ est le pas de denture
R est la distance pivot-roulante
d0 est l'entraxe initial
$\mu$ est le coefficient de frottement.

**Claims**

1.  A transmission for transforming a rotary movement into a translational movement, comprising a cam (4) pivoting about an axis (0) and a counter-cam (8) pivoting about a pivot ($\Omega$), the pivot being intended to be coupled with a member performing a translational movement, the cam having a cam surface provided with a toothed profile (12) engaging with a cam surface provided with a toothed profile (14) of the counter-cam, **characterized in that** the cam (4) is bidirectional and pivots about the axis (0) over an angle of less than 90˚, and the counter-cam (8) is bidirectional and pivots about the pivot (Ω) over an angle of less than 90˚.

2. The transmission according to claim 1, **characterized in that** the toothed surface of the cam, respectively of the counter-cam, is undulated so that there are at least two contact points (34, 36) distant from each other, and where the lines of forces perpendicular to the contact surfaces are not parallel.

3. The transmission according to claim 1 or 2, **characterized in that** the toothed profile of the cam surface, respectively of the counter-cam surface, comprises an undulated profile without any angled points, the mathematical expression of which is continuously differentiable.

4. The transmission according to any of the preceding claims, **characterized in that** all the points of the toothed profile of the cam and counter-cam surface participate in the transmission and are in contact with the conjugate profile at some point in time depending on the position.

5. The transmission according to any of the preceding claims, **characterized in that** the cam is provided with a secondary profile opposite to the toothed cam surface relatively to the axis of rotation, engaging with a secondary profile of the counter-cam positioned facing the toothed counter-cam surface in order to effect driving in the radial direction opposite to the one achieved by the toothed cam surfaces, while guaranteeing meshing of the latter.

6. The transmission according to any of the preceding claims, **characterized in that** the resulting force (F) for engaging the cam and counter-cam surfaces, in all the points of the profile, comprises a non-zero tangential component (Ft) with invariable direction in order to ensure reversibility of the system.

7. The transmission according to any of the preceding claims, **characterized in that** the transmission law of the transmission satisfies the relationship

$$\frac{d}{d\theta} X > \mu \cdot \frac{r + \lambda}{R} \cdot (d0 + X - R)$$

where
X is the translational displacement of the pivot
θ is the angle of rotation of the cam
r is the pivot radius
λ is the tooth pitch
R is the pivot-roulette distance
d0 is the initial centre distance
μ is the friction coefficient.

**Patentansprüche**

1. Getriebe zur Umsetzung einer Drehbewegung in eine Schiebebewegung, umfassend einen Nocken (4), der sich um eine Achse (0) dreht und einen Nockenstößel (8), der sich um einen Drehpunkt (Ω) dreht, wobei der Drehpunkt dazu vorgesehen ist, an ein Organ gekoppelt zu werden, das eine Schiebebewegung durchführt, wobei der Nocken eine Nockenfläche aufweist, die mit einem Zahnprofil (12) ausgestattet ist, das in eine Nockenfläche eingreift, die mit einem Zahnprofil (14) des Nockenstößels ausgestattet ist, **dadurch gekennzeichnet, dass** der Nocken (4) bidirektional ist und sich um die Achse (0) in einem Winkel von weniger als 90˚ dreht und der Nockenstößel (8) zweidirektional ist und sich um den Drehpunkt (Ω) in einem Winkel von weniger als 90˚ dreht.

2. Getriebe nach Anspruch 1, **dadurch gekennzeichnet, dass** die Zahnfläche des Nockens bzw. des Nockenstößels gewellt ist, so dass sie zumindest zwei Kontaktpunkte (34, 36) aufweist, die voneinander beabstandet sind, und wobei die normalen Kraftlinien der Kontaktflächen nicht parallel sind.

3. Getriebe nach Anspruch 1 oder 2, **dadurch gekennzeichnet, dass** das Zahnprofil der Nockenfläche bzw. der Nockenstößelfläche eine Wellung des Profils ohne Winkelpunkte umfasst, deren mathematischer Ausdruck ununterbrochen ableitbar ist.

4. Getriebe nach einem der vorhergehenden Ansprüche, **dadurch gekennzeichnet, dass** alle Punkte des Zahnprofils der Nocken- und der Nockenstößelfläche am Getriebe beteiligt sind und mit dem konjugierten Profil je nach der Position zum einen oder anderen Zeitpunkt in Kontakt sind.

5. Getriebe nach einem der vorhergehenden Ansprüche, **dadurch gekennzeichnet, dass** der Nocken mit einem sekundären Profil ausgestattet ist, das der Zahn-Nockenfläche bezüglich der Drehachse entgegengesetzt ist, das in ein sekundäres Profil des Nockenstößels eingreift, angeordnet gegenüber der Zahnfläche des Nockenstößels, um einen Antrieb in radialer Richtung entgegen demjenigen durchzuführen, der von den Zahn-Nockenflächen ausgeführt wird, wobei der Eingriff dieser gewährleistet wird.

6. Getriebe nach einem der vorhergehenden Ansprüche, **dadurch gekennzeichnet, dass** die resultierende Kraft (F) des Eingriffs der Nocken- und Nockenstößelflächen an allen Punkten des Profils eine tangentiale Komponente (Ft), von Null verschieden und unveränderlicher Richtung, umfasst, um die Umkehrbarkeit des Systems sicherzustellen.

7. Getriebe nach einem der vorhergehenden Ansprüche, **dadurch gekennzeichnet, dass** das Gesetz der Bewegungsübertragung des Getriebes dem folgenden Verhältnis entspricht:

$$\frac{d}{d\theta} X > \mu \cdot \frac{r + \lambda}{R} \cdot (d0 + X - R)$$

wobei
X die Schiebebewegung des Drehpunktes ist
$\theta$ der Drehwinkel des Nockens ist
r der Radius des Drehpunktes ist
$\lambda$ die Zahnteilung ist
R der Abstand zwischen Drehpunkt und Rollfläche ist
d0 der ursprüngliche Achsabstand ist
$\mu$ der Reibungskoeffizient ist.

**Fig. 1a**

**Fig. 1b**

**Fig. 2**

## Fig. 3

**Courbe de transmission**

*Force de translation [N]* vs *Course x [mm]*

26

## Fig. 4

**Profils de came-engrenage**

32

14

12

20

**Fig. 5**

**Fig. 6**

Effort de maintien sur Waste-Gate

Force [N]

Course linéaire [mm]

Fig. 7

base

roulante

34 — P1

$\vec{F}$

$\vec{Ft}$

$\vec{Fr}$

36 — P2

30

28

12

14

$\vec{Q2}$

B (point de contact base/roulante)

vers le pivot

$\vec{Q1}$

$-\vec{Q} = \vec{F}$

**Condition de réversibilité (sur dX/dθ)**

Fig. 8

dX/dθ [mm/rad]

X(θ) [mm]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- DE 19815653
- DE 19601300

- WO 9837309 A
- US 5517931 A